# EUROPÄISCHE PATENTSCHRIFT

(11) **EP 2 758 610 B1**
(45) Veröffentlichungstag und Bekanntmachung des Hinweises auf die Patenterteilung: **09.12.2015**
(21) Anmeldenummer: 12783323.4
(22) Anmeldetag: 19.09.2012
(51) Int. Cl.: C04B 28/04, C04B 111/00, E04C 2/288

(54) **BAUPLATTE MIT GESCHÄUMTEM KERN UND EINER ABDECKUNG MIT NANOZUSATZSTOFFEN**
Method for producing a construction panel
Méthode pour fabriquer un panneau de construction

(30) Priorität: 21.09.2011 DE 102011114001
(43) Veröffentlichungstag der Anmeldung: 30.07.2014
(73) Patentinhaber: Mostafa, Kamal, Gizeh (EG)
(72) Erfinder: Mostafa, Kamal, Gizeh (EG)
(74) Vertreter: Hansen, Jochen
(86) Internationale Anmeldenummer: PCT/IB2012/054960
(87) Internationale Veröffentlichungsnummer: WO 2013/042050

(56) Entgegenhaltungen:
- EP-A1- 1 039 058
- CN-Y- 2 672 189
- CN-Y- 201 172 910
- DE-A1-102006 028 837
- DE-U1-202007 007 511

## Beschreibung

Gegenstand der vorliegenden Erfindung ist ein Verfahren zur Herstellung einer Bauplatte umfassend ein aufgeschäumtes Kernmaterial und mindestens eine außenseitig auf das Kernmaterial aufgebrachte Beschichtung mit eingelassenem Gewebe als Armierung dieser Beschichtung.

Grundsätzlich sind derartige Bauplatten in unterschiedlichsten Formen und Varianten seit geraumer Zeit bekannt. Dabei besteht der meist mehrere Zentimeter dicke Kern in der Regel aus einem ausgeschäumten Kunststoff, wie Polystyrol- oder Polyurethanschaum, auf den eine Beschichtung von ca. 1 bis 1,5 mm Dicke auf Zementbasis mit alkaliresistentem Glasgittergewebe aufgebracht ist.

Darüber hinaus sind auch Ausführungen mit einer Polymerbeschichtung wie Epoxid- und/oder Polyurethanharzbeschichtung bekannt, in die ein Glasgittergewebe und/oder ein Glasvlies eingebettet ist. Die Oberflächen dieser Platten sind zur Gewährleistung der Haftung von Fliesenklebstoffen mit Quarzsand abgestreut.

Aus der DE 20 2007 007 511 U1 ist ein Außenwand-Dachschalungselement eines Hauses als Verbundelement von gleichen Schalungskomponenten nach dem Prinzip der verlorenen Schalung bekannt, wobei das Wandelement einen Kern aus einer Wärmedämmschicht mit einer flächigen Vorderseite und Rückseite, eine die Vorderseite abdeckende Wetterschutzschale als abdeckende Beschichtung mit darin eingelassenem Glasfaser-Gewebe aufweist und die Oberfläche der Wetterschutzschale mit einer innovativen Beschichtung (Nanotechnologie) versehen wird.

Aus der DE 10 2006 028 837 A1 ist ein Verfahren zur Herstellung einer Mineralwolle-Dämmplatte mit benetzungsfähigen und haftvermittelnden Oberflächen, insbesondere für Wärmedämm-Verbundsysteme bekannt.

Aus der EP 1 039 058 A1 ist ein Verfahren zur Herstellung von Wärmedämmverbundsystemen mit Hilfe einer organischen Klebe- bzw. Spachtelmasse bekannt, bei der die Klebe-/Spachtelmasse vor ihrem Einsatz aufgeschäumt wird.

Die zum Teil durchweg sehr anwendungsorientiert entwickelten Bauplatten haben sich in vielen Bereichen schon sehr bewährt, doch gibt es einen erkannten Bedarf nach einer Bauplatte mit weiter erhöhter Biegesteifigkeit und noch mehr verbesserter Haftfestigkeit im Rahmen ihrer Verbindung mit einen geeigneten Haftgrund. Gleichzeitig soll sich die neue Bauplatte durch eine möglichst reduzierte Wasseraufnahme aus der Luft und/oder bei direktem Wasserkontakt an den flächigen Außenseiten auszeichnen.

Das Ziel der Erfindung liegt vor diesem Hintergrund darin begründet, der Öffentlichkeit ein derart beschriebenes Verfahren zur Herstellung einer Bauplatte zur Verfügung zu stellen, deren mechanische Eigenschaften, wie beispielsweise deren Biegefestigkeit, verbessert sind und die gleichzeitig eine erhöhte Haftzugfestigkeit eines handelsüblichen die vorgeschlagene Bauplatte mit einem Baugrund verklebenden Kontaktklebers, wie beispielsweise Fliesenkleber, gewährleistet.

Das gesteckte Ziel wird erfindungsgemäß mit einem Verfahren zur Erstellung einer Bauplatte gemäß Anspruch 1 erreicht, umfassend:
- einen Kern aus einem aufgeschäumten Material mit einer flächigen Vorderseite und einer der Vorderseite gegenüberliegenden flächigen Rückseite,
- mindestens eine auf mindestens einer Seite aus Vorder- und Rückseite des Kerns aufgebrachte und dabei den Kern auf dieser mindestens einen Seite vollflächig abdeckende Beschichtung mit eingelassenen Armierungskomponenten,
wobei die neue Bauplatte dadurch gekennzeichnet ist, dass
- die mindestens eine Beschichtung in flüssigem und/oder pastösem Zustand auf das Kernmaterial aufgebracht ist,
- die Schichtdicke der mindestens einen Beschichtung mit den eingelassenen Armierungskomponenten in einem Bereich zwischen 0,5 und 1,8 mm liegt,
- das Material zur Ausbildung der mindestens einen Beschichtung Nanozusatzstoffe als Komponenten enthält, ausgesucht aus der Liste, umfassend: "Nanosilica" und Carbon Nanotubes (CNT).

Grundsätzlich wurde in den letzten Jahren im Rahmen der Erstellung von Gebäuden und Bauwerken vermehrt über die Verwendung von Hochleistungsbetonen berichtet, bei denen als Komponenten so genannte Nanozusatzstoffe, wie beispielsweise "Nanosilica" oder Carbon Nanotubes (CNT), eingesetzt werden. Den besagten Nanozusatzstoffen wird dabei nachgesagt, dass sie die Dichtigkeit der sie aufweisenden Gefüge zu steigern in der Lage sind und dass sie so zur Verbesserung der zwischen Beton und Bewehrungsstahl sowie zwischen Alt- und Neubeton bestehenden Verbundenheit beitragen können. Gleichzeitig sollen sie zur Verbesserung beispielsweise hinsichtlich der Feuerbeständigkeit und der Wasserresistenz der aus ihnen hergestellten Gewerke beitragen. Ein Einsatz dieser schon bekannten Nanozusatzstoffe innerhalb der Beschichtung von Bauplatten ist jedoch bisher nicht bekannt und wurde durch den bisherigen Stand der Technik auch nicht nahegelegt.

Die neue Bauplatte soll in dem Material zur Ausbildung der mindestens einen Beschichtung
- zum einen Nanosilica enthalten können, worunter nanoskaliges Silizimdioxid mit einer Teilchengröße in einem Bereich von 1 nm bis 100 nm zu verstehen ist und
- zum anderen Carbon Nanotubes (CNT) enthalten können, worunter Kohlenstoff-Nanoröhrchen zu verstehen sind mit Außendurchmessern unter 100 nm, gewöhnlich und bevorzugt mit Außendurchmessern in einem Bereich zwischen 1 nm und 15 nm bei bevorzugten durchschnittlichen Längen in einem Bereich zwischen 1 µm und 15 µm; die Kohlenstoff-Nanoröhrchen werden dabei häufig unterschieden in Single Wall Nanotubes (SWNT), Double Wall Nanotubes (DWNT) und Multi Wall Nanotubes (MWNT) - erfindungsgemäß gelten die Kohlenstoff-Nanoröhrchen in allen genannten Ausführungsformen als bevorzugt.

Die erfindungsgemäß in dem Material zur Ausbildung der mindestens einen Beschichtung enthaltenen
- Nano Silica machen dabei bevorzugt einen auf die die fertige Beschichtung bezogenen Zugabe-Anteil von 0.05 bis 4 Gew.-%
- Carbon Nanotubes (CNT) machen dabei bevorzugt einen auf die die fertige Beschichtung bezogenen Zugabe-Anteil von 0.005 bis 2 Gew.-%
aus. Es gilt als eine erste bevorzugte Ausführungsvariante, dass das Material zur Ausbildung der mindestens einen Beschichtung als nanoskalige Komponenten ausschließlich Nano Silica in den oben genannten Bereichsmengen enthält, im Rahmen einer zweiten bevorzugten Ausführungsvariante enthält das Material zur Ausbildung der mindestens einen Beschichtung als nanoskalige Komponenten ausschließlich Carbon Nanotubes (CNT) in den oben genannten Bereichsmengen. Im Rahmen einer dritten ganz besonders bevorzugten Ausführungsvariante enthält das Material zur Ausbildung der mindestens einen Beschichtung als nanoskalige Komponenten sowohl Nano Silica wie auch Carbon Nanotubes (CNT) beide jeweils in den oben genannten Bereichsmengen.

Neben den oben näher definierten Nanozusatzstoffen umfasst das Material zur Ausbildung der mindestens einen Beschichtung insbesondere und bevorzugt
- Zement mit einem auf das Material zur Ausbildung der mindestens einen Beschichtung bezogenen Zugabe-Anteil von 30 bis 40 Gew.-%,
- Quarzsand mit einem auf das Material zur Ausbildung der mindestens einen Beschichtung bezogenen Zugabe-Anteil von 50 bis 60 Gew.-%,
- Dispergiermittel mit einem auf das Material zur Ausbildung der mindestens einen Beschichtung bezogenen Zugabe-Anteil von 0 bis 2 Gew.-%.

Bei Verwendung der im vorherigen Absatz offenbarten Bestandteile werden besonders bevorzugte, wirtschaftlich hoch interessante, weil niedrig preisige Bauplatten ermöglicht. Gleichsam gelten Polymerbeschichtungen wie Epoxid- und/oder Polyurethanharzbeschichtungen, ebenfalls unter Zusatz der oben näher definierten Nanozusatzstoffen mit einem auf die fertige Beschichtung bezogenen Zugabe-Anteil von 0.05 bis 2 Gew.-%, als bevorzugt, da sie besonders leichte und dennoch strapazierfähige Bauplatten gewährleisten.

Gemäß einer ersten bevorzugten Ausführungsform besteht der Kern der hier vorgeschlagenen Bauplatte aus aufgeschäumtem Kunststoffmaterial oder der Kern umfasst ein solches aufgeschäumtes Kunststoffmaterial, wobei das aufgeschäumte Kunststoffmaterial ausgesucht ist aus der Liste, umfassend: Polystyrolschaum, Polyurethanschaum, PVC-Schaum, Phenolschaum. Die genannten Kunststoffschäume können dabei Graphit modifiziert sein, was als ganz besonders bevorzugt innerhalb der ersten bevorzugten Ausführungsform angesehen wird.

Der Kern der hier vorgeschlagenen Bauplatte kann gemäß einer zweiten bevorzugten Ausführungsform auch aus einem aufgeschäumten mineralischen Material bestehen oder dieses umfassen, ausgesucht aus der Liste, umfassend Glasschaum und Steinschaum.

Die Schichtdicke der mindestens einen Beschichtung mit den eingelassenen Armierungskomponenten, die auf mindestens einer Seite aus Vorder- und Rückseite des Kerns aufgebracht ist, liegt erfindungsgemäß nach ihrer Trocknung bzw. Vernetzung in einem Bereich zwischen 0,5 und 1,8 mm, ein besonders bevorzugter Bereich liegt zwischen 0,5 und 1,5 mm und im Rahmen eines noch weiter bevorzugten Bereichs zwischen 0,5 und 1,0 mm, womit sie noch dünner und damit leichter ausfällt als die armierungsverstärkten Beschichtungen aller bekannten Bauplatten, wie sie tatsächlich angeboten werden. Nach oben ist die Dicke der Beschichtung mit den eingelassenen Armierungskomponenten letztendlich begrenzt über das im Verkauf noch akzeptierte Gewicht der Bauplatten, das hauptsächlich durch die Beschichtung selbst bestimmt wird. Nach unten ist die Dicke der Beschichtung zunächst durch die Dicke der eingelassenen Armierungskomponenten bestimmt, die bevorzugt durch die Beschichtung strukturfüllend geschlossen und vollständig von beiden Seiten umhüllt und umschlossen werden. Bei sehr dünnen Armierungskomponenten, die als Armierung in der Beschichtung eingebunden sind, kann auch die Beschichtung selbst sehr dünn ausfallen und dann gegebenenfalls Dicken sogar unter 0,5 mm erreichen.

In einer bevorzugten und im vorherigen Absatz schon angedeuteten Ausführungsform sind die eingelassenen Armierungskomponenten vollflächig und insbesondere beidseitig von dem Material zur Ausbildung der mindestens einen Beschichtung strukturfüllend umhüllt. Die Armierungskomponenten befinden sich folglich in der Mitte der Schichtstärke der mindestens einen Beschichtung und werden von dessen Material vollständig und gesättigt umschlossen. Dadurch wird der Verbund zwischen den eingelassenen Armierungskomponenten und dem Material zur Ausbildung der mindestens einen Beschichtung bedeutend optimiert, wodurch die mechanischen Eigenschaften der Bauplatte, wie beispielsweise deren Biegefestigkeit, verbessert werden.

Werden gemäß vorstehend vorgeschlagener bevorzugter Ausführungsform die eingelassenen Armierungskomponenten vollflächig und insbesondere beidseitig von dem Material zur Ausbildung der mindestens einen Beschichtung strukturfüllend umhüllt, kann die außenseitige Oberfläche der neuen Bauplatte auf mindestens der Seite, auf die die Beschichtung mit den eingelassenen Armierungskomponenten aufgetragen ist, völlig entkoppelt zu den äußeren Strukturen der eingelassenen Armierungskomponenten in der Beschichtung ausgestaltet werden. So kann die Oberfläche völlig plan sein und keinerlei Strukturen aufweisen. Um eine verbesserte Haftzugfestigkeit eines die vorgeschlagene Bauplatte mit einem vorgegebenen Baugrund verklebenden Kontaktklebers, wie beispielsweise Fliesenkleber, zu gewährleisten, ist es jedoch bevorzugt, wenn die mindestens eine Beschichtung außenseitig eine von den eingelassenen Armierungskomponenten entkoppelte, bevorzugt tiefenplastisch gestaltete Oberflächenstruktur aufweist. Diese von den eingelassenen Armierungskomponenten entkoppelte Oberflächenstruktur kann beispielsweise den Charakter eines Netzes, eine Wabenstruktur, eine Sandpapierstruktur sowie eine kreis-, linien- und/oder gitterförmige Grundstruktur mit Strukturabständen von bevorzugt 0,5 bis 5 mm aufweisen, ohne im Sinne der vorliegenden Erfindung dahingehend beschränkt zu sein. Entscheidenderweise kann die von den eingelassenen Armierungskomponenten entkoppelte Oberflächenstruktur der Beschichtungsoberfläche auf eine optimale Haftzugfestigkeit für die mit einem Baugrund mittels Kontaktkleber zu verklebende vorgeschlagene Bauplatte perfektioniert werden und ist dabei nicht an die Struktur der in die Beschichtung eingelassenen Armierungskomponenten angewiesen.

Die Beschichtung der hier vorgeschlagenen Bauplatte ist bevorzugt ausgebildet
- durch Auftrag des Materials zur Ausbildung der mindestens einen Beschichtung im flüssigem und/oder pastösem Zustand: dieser Auftrag kann beispielsweise durch Aufgießen, Schlämmen oder Aufspritzen geschehen, ohne auf diese Auftragsarten in irgendeiner Art und Weise beschränkt zu sein.
- durch Auflage von Armierungskomponenten auf das noch flüssige und/oder pastöse Material zur Ausbildung der mindestens einen Beschichtung. Als Armierungskomponenten bieten sich im Sinne der Erfindung unter anderem Nylon- oder Stahlnetze, Gewebe insbesondere aus organischen und/oder künstlichen Fasern und/oder Fäden, nicht gewebtes oder gewebtes Vlies und insbesondere Glasgittergewebe an.
- durch rhythmisches Eindrücken der Armierungskomponenten in das noch flüssige und/oder pastöse Material zur Ausbildung der mindestens einen Beschichtung.
- durch ein optionales Nachbehandeln
- des noch flüssigen und/oder pastösen Materials
oder
- des zuvor leicht angetrockneten und/oder teilvernetzten Materials zum Ausbilden der mindestens einen auf mindestens einer Seite aus Vorder- und Rückseite des Kerns aufgebrachten und dabei den Kern auf dieser mindestens einen Seite vollflächig abdeckende Beschichtung mit den eingelassenen Armierungskomponenten.

Dieses Nachbehandeln kann unter anderem sein:
- Pressen,
- Prägen,
- Walzen,
- Vibrieren, was insbesondere heißt: die Bauplatte mit der mindestens einen aufgebrachten mindestens angetrockneten oder mindestens teilvernetzten Beschichtung wird in Schwingung versetzt.

Ziel dieser Nachbehandlung ist das Ausgestalten einer von den eingelassenen Armierungskomponenten entkoppelten Oberflächenstruktur der Bauplatte auf der Seite, die mit der mindestens einen Beschichtung abgedeckt ist.
- durch Trocknen und/oder Vernetzen des Materials zur Ausbildung der mindestens einen Beschichtung.

Die Erfindung ist gerichtet auf ein Verfahren zur Herstellung der vorgeschlagenen Bauplatte in all ihren zuvor bereits geschilderten Ausführungsformen und -varianten, wobei das Verfahren mindestens die folgenden Verfahrenschritte aufweist:
- Zuführen eines plattenförmigen Kerns,
- Auftragen von einem vorbereiteten Material zum Ausbilden von mindestens einer Beschichtung im flüssigem und/oder pastösem Zustand auf mindestens eine Seite des plattenförmigen Kerns, wobei das vorbereitete Material zum Ausbilden der mindestens einen Beschichtung Nanozusatzstoffe als Komponenten enthält, ausgesucht aus der Liste, umfassend: "Nanosilica" und Carbon Nanotubes (CNT),
- Auflegen von Armierungskomponenten auf das noch flüssige und/oder pastöse Material zur Ausbildung der mindestens einen Beschichtung,
- rhythmisches Eindrücken der Armierungskomponenten in das noch flüssige und/oder pastöse Material zur Ausbildung der mindestens einen Beschichtung,
- Trocknen und/oder Vernetzen des Materials zum Ausbilden der mindestens einen auf mindestens einer Seite aus Vorder- und Rückseite des Kerns aufgebrachten und dabei den Kern auf dieser mindestens einen Seite vollflächig abdeckenden Beschichtung mit den eingelassenen Armierungskomponenten.

Das rhythmische Eindrücken der Armierungskomponenten in das noch flüssige und/oder pastöse Material zur Ausbildung der mindestens einen Beschichtung wird derart und so lange und so intensiv ausgeführt, bis die Armierungskomponenten gegen die Rückstellkräfte insbesondere des plattenförmigen Kerns inmitten der mindestens einen Beschichtung positioniert sind.

Sofern es sich bei dem Material zur Ausbildung der Beschichtung um einen wässerigen Mörtel auf Zementbasis handelt, wird dieses Material nach Einarbeitung der Armierungskomponenten getrocknet, wobei sich alternativ oder ergänzend auch die Einarbeitung vernetzbarer Komponenten in das Beschichtungsmaterial bewährt hat. Ist das Material zur Ausbildung der Beschichtung auf der Basis von Epoxid- und/oder Polyurethanharz zusammengestellt, bietet sich insbesondere eine Vernetzung des Materials an.

Es stellt eine bevorzugte Ausführung des vorgeschlagenen Herstellungsverfahrens dar, wenn die Beschichtung
- nach ihrem Auftrag und
- nach dem Auflegen und dem rhythmischen Eindrücken der Armierungskomponenten, jedoch
- vor ihrem Trocknen und/oder Vernetzen zum Ausbilden der mindestens einen auf mindestens einer Seite aus Vorder- und Rückseite des Kerns aufgebrachten und dabei den Kern auf dieser mindestens einen Seite vollflächig abdeckenden Beschichtung mit den eingelassenen Armierungskomponenten, nachbehandelt wird, wobei diese Nachbehandlung ausgesucht ist aus der Liste, umfassend:
   - Pressen,
   - Prägen,
   - Walzen,
   - Vibrieren.

Ziel dieses Nachbehandelns ist das Ausgestalten einer von den eingelassenen Armierungskomponenten entkoppelten Oberflächenstruktur der Bauplatte auf der Seite, die mit der mindestens einen Beschichtung abgedeckt ist.

Die vorliegende Erfindung soll durch die beiden nachfolgenden Beispiele weitergehend veranschaulicht werden.

### Erfindungsgemäßes Beispiel 1:

Auf eine 19 mm dicke XPS-Polystyrolschaumplatte als Kern wird im flüssigen Zustand einseitig eine wässerige Mörtelbeschichtungsmasse aufgetragen, wozu eine Rezeptur für das Material zur Ausbildung dieser mindestens einen Beschichtung zum Einsatz kommt entsprechend der folgenden Tabelle 1:

**Tabelle 1: Materialzusammensetzung zur Ausbildung der mindestens einen Beschichtung**

| Material | Beispiel 1 (erfindungsgemäß) | Beispiel 2 (Vergleichsbeispiel) |
|---|---|---|
| | auf das Material zur Ausbildung der Beschichtung bezogenen Zugabe-Anteil [Gew.-%] | |
| Zement | 34.42 | 34.50 |
| Quarzsand Füllstoffe, Teilchengröße: 0 bis 0,25 mm | 51.62 | 51.70 |
| Dispergiermittel (als 40%-ige Lösung) | 0.10 | 0.10 |
| Nanosilica (als 10%-ige Lösung) | 0.060 | - |
| Carbon Nanotubes (CNT) (als 10%-ige Lösung) | 0.021 | - |
| Wasser | 13.78 | 13.70 |

Auf die nicht angetrocknete Beschichtungsmasse wird ein 0,25 mm dickes Glasgittergewebe aufgelegt und durch rhythmisches Eindrücken in das noch flüssige Beschichtungsmaterial mittig eingearbeitet. Die Beschichtung erhält durch Pressung sodann ein Fischgrätmuster. Nach dem sich daran anschließenden Trocknen der Beschichtung hat diese einschließlich des durch das Beschichtungsmaterial vollständig und gleichmäßig umschlossenen Glasgittergewebes eine Dicke von 0,9 mm.

Als Vergleichbeispiel 2 dient eine handelsüblich hergestellte Bauplatte mit 19 mm dicker XPS-Polystyrolschaumplatte als Kern und einer Beschichtung, deren Rezeptur sich gleichfalls aus Tabelle 1 ergibt. Die Beschichtungsmasse wird wie üblich im Stand der Technik auf ein zuvor auf den Kern aufgelegtes Glasgittergewebe mit einer Dicke von 0,9 mm aufgegossen und anschließend getrocknet.

Die fertig gestellten Bauplatten gemäß erfindungsgemäßem Beispiel 1 und Vergleichsbeispiel 2 werden anschließend messtechnisch untersucht. Es ergeben sich die folgenden Vergleichsergebnisse gemäß Tabelle 2:

**Tabelle 2: Platteneigenschaften**

| | Beispiel 1 (erfindungsgemäß) | Beispiel 2 (Vergleichsbeispiel) |
|---|---|---|
| Biegefestigkeit nach DIN EN12089 (N/mm2) | 2.54 | 2.06 |
| Haftung an Fliesenkleber (Ardu-Flex 5000 Firma Ardex UK nach DIN EN 1322 (N/mm2) | 0.53 | 0.38 |
| Wasseraufnahme nach DIN EN 12087 (vol. %) | 0.78 | 1.29 |

Die Beispiele belegen ein weiteres Mal die komplette Überlegenheit der vorgeschlagenen Erfindung.

## Patentansprüche

1. Verfahren zur Herstellung einer Bauplatte, mindestens aufweisend die Verfahrensschritte:
- Zuführen eines plattenförmigen Kerns,
- Auftragen von einem vorbereiteten Material zum Ausbilden von mindestens einer Beschichtung in flüssigem und/oder pastösem Zustand auf mindestens eine Seite des plattenförmigen Kerns, wobei das vorbereitete Material zum Ausbilden der mindestens einen Beschichtung Nanozusatzstoffe "Nanosilica" und/oder Carbon Nanotubes (CNT), als Komponenten enthält,
- Auflegen von Armierungskomponenten auf das noch flüssige und/oder pastöse Material zur Ausbildung der mindestens einen Beschichtung,
**gekennzeichnet durch** die weiteren Verfahrensschritte:
- rhythmisches Eindrücken der Armierungskomponenten in das noch flüssige und/oder pastöse Material zur Ausbildung der mindestens einen Beschichtung,
- Trocknen und/oder Vernetzen des Materials zum Ausbilden der mindestens einen auf mindestens einer Seite aus Vorder- und Rückseite des Kerns aufgebrachten und dabei den Kern auf dieser mindestens einen Seite vollflächig abdeckenden Beschichtung mit den eingelassenen Armierungskomponenten.

2. Verfahren zur Herstellung einer Bauplatte nach Patentanspruch 1, **dadurch gekennzeichnet, dass** das Verfahren mindestens den weiteren Verfahrensschritt aufweist:
- Nachbehandeln des noch flüssigen und/oder pastösen Materials zum Ausbilden der mindestens einen auf mindestens einer Seite aus Vorder- und Rückseite des Kerns aufgebrachten und dabei den Kern auf dieser mindestens einen Seite vollflächig abdeckenden Beschichtung mit den eingelassenen Armierungskomponenten druch Pressen, Prägen, Walzen und/oder Vibrieren.

## Claims

1. A method for producing a structural panel, at least having the method steps:
- supplying a panel-shaped core,
- applying a prepared material to form at least one coating in liquid and/or pasty state to at least one side of the panel-shaped core, wherein the prepared material for forming the at least one coating contains as constituents nano-additives "nanosilica" and/or carbon nanotubes (CNT),
- laying reinforcement components on the still liquid and/or pasty material for forming the at least one coating,
**characterised by** the further method steps:
- rhythmic pressing of the reinforcement components into the still liquid and/or pasty material for forming the at least one coating,
- drying and/or cross-linking of the material for forming the at least one coating with the set-in reinforcement components which is applied to at least one side out of the front side and rear side of the core and in so doing covers the entire surface of the core on this at least one side.

2. A method for producing a structural panel according to Claim 1, **characterised in that** the method has at least the further method step:
- subsequently treating the still liquid and/or pasty material for forming the at least one coating with the set-in reinforcement components which is applied to at least one side out of the front side and rear side of the core and in so doing covers the entire surface of the core on this at least one side by pressing, embossing, rolling and/or vibrating.

## Revendications

1. Procédé de fabrication d'une dalle de construction qui présente au moins les étapes suivantes :
- admission d'un noyau en forme de dalle,
- application d'un matériau préparé pour former au moins un revêtement à l'état liquide et/ou pâteux sur au moins une face du noyau en forme de dalle, le matériau préparé pour former le au moins un revêtement contenant comme composant des additifs nanométriques « nanosilice » et/ou des nanotubes de carbone (CNT),
- pose de composants d'armature sur le matériau pour former le au moins un revêtement encore liquide et/ou pâteux,
**caractérisé par** les étapes supplémentaires
- enfoncement rythmé des composants d'armature dans le matériau pour former le au moins un revêtement encore liquide et/ou pâteux,
- séchage et/ou réticulation du matériau pour former le au moins un revêtement appliqué avec les composants d'armatures noyés dedans sur au moins une face du noyau parmi la face avant et la face arrière et recouvrant ainsi intégralement le noyau sur cette au moins une face.

2. Procédé pour fabriquer une dalle de construction selon la revendication 1, **caractérisé en ce que** le procédé présente au moins les étapes supplémentaires :
- traitement postérieur du matériau encore liquide et/ou pâteux pour former le au moins un revêtement appliqué sur au moins une face du noyau parmi la face avant et la face arrière et recouvrant ainsi intégralement le noyau sur cette au moins une face avec les composants d'armature noyés dedans par application de pression, estampage, laminage et/ou application de vibrations.
